(19)

Europäisches
Patentamt
European
Patent Office
Office européen
des brevets

(11) **EP 2 590 041 A2**

(12) **EUROPEAN PATENT APPLICATION**

(43) Date of publication:
**08.05.2013 Bulletin 2013/19**

(51) Int Cl.:
**G05D 1/02** (2006.01)

(21) Application number: **12007555.1**

(22) Date of filing: **07.11.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **07.11.2011 NL 1039154**

(71) Applicant: **Udo, Willem-Dirk Hendrik
4023 AJ Rijswijk (GLD) (NL)**

(72) Inventor: **Udo, Willem-Dirk Hendrik
4023 AJ Rijswijk (GLD) (NL)**

(74) Representative: **Griebling, Onno
Octrooibureau Griebling BV
Sportweg 10
5037 AC Tilburg (NL)**

(54) **Target-following vehicle**

(57)     A target-following vehicle (1) comprises:
a frame (2) carrying wheels (3), the frame having a front
side and a rear side;
driving means (121; 122; 123) for driving the wheels;
control means (110) for controlling the driving means;
a remote target unit (200) associated with the vehicle;
stereoscopic location detection means (150) for detecting the relative location of the remote target unit (200)
with respect to the vehicle.

The control means control the driving means such
that the front side of the frame is directed to the remote
target unit, and such that the distance between vehicle
and remote target unit is reduced if that distance is more
than a predetermined desired distance.

FIG. 2

EP 2 590 041 A2

## Description

The present invention relates in general to vehicles intended to follow a target.

The target may be a human. Exemplary situations of the vehicles intended include a golf-caddy, a shopping-cart, a baby-buggy. The invention also relates to carts used in warehousing.

In the above examples, it is customary that the vehicles mentioned are pushed or pulled by a user. This requires the user, at least during displacement of the vehicle, to have physical contact with the vehicle. This is not a great burden in the case of a user taking a stroll with a pram. However, there are many situations where a user would wish to have his/her hands free for other purposes, such as for instance in the case of playing golf, or shopping, etc. In such cases, the user is walking around, and the vehicle is left standing, so the user must always return to the vehicle. In the case of a buggy carrying a baby, it is worrisome for the parent to take distance from the vehicle. In the case of a golf-caddy, the user may wish to change a club, and it is disturbing for his concentration that he has to walk away to where he left the caddy. So, in all of such examples, it would be advantageous if the vehicle would be a self-propelled vehicle, capable of autonomous motion, and designed to closely follow the user.

The target may also be another vehicle. There are many examples in agriculture and industry where the work demands that two or more vehicles move in harmony. For instance, a harvester needs to be followed by a tractor pulling a collecting trailer. Similar situations occur in mining.

In the film industry, a shooting sometimes requires that a vehicle carrying one or more cameras follows a person, or an animal, or another vehicle.

Further, it may be very attractive to children to have a toy that magically follows their every move. Such toy may have the visual appearance of a car, or of any of the above-mentioned cart-type vehicles, but such toy may also have the visual appearance of an animal such as a dog or pussy.

It is noted that autonomous or robotic golf caddy vehicles are already known. By way of example, reference is made to international patent application publication WO-99/12793 and US patent application 2010/0168934.

It is a general objective of the present invention to improve on prior art robotic vehicles.

A problem with many prior art robotic golf caddy vehicles is that they tend to require complicated GPS systems for navigation.

One aspect of autonomous vehicles with follow capabilities is a beacon to be carried by the user. The vehicle will actually follow the beacon, also indicated as "target", which is typically small and invisibly stored in a pocket so that it seems as if the vehicle is following the person. A further problem of autonomous vehicles relates to the beacon. Typically, the beacon transmits a signal that is received by the vehicle, which signal determines where the vehicle should go. However, this requires the beacon to transmit a beacon signal, which requires a relatively high energy consumption. This in turn has consequences for the time available for operation, or for the size and costs of the beacon, or both.

GB-2283838 discloses a robotic golf trolley having a remote control unit, communicating with each other via coded ultrasonic signals. The trolley has an ultrasonic transmitter and the remote control unit has an ultrasonic receiver. The trolley transmits a coded ultrasonic signal, which is received and processed by the remote control unit. If the received code corresponds to a code stored in the remote control unit, the remote control unit will send a coded response signal to the trolley. For this purpose, the remote control unit has an ultrasonic transmitter and the trolley has a plurality of ultrasonic receivers distributed over its body. A processer at the trolley will decode and process the received signals. The distance between trolley and the remote control unit is calculated on the basis of the time lapsed between the moment of the initial transmission by the trolley and the moment of remote's response signal being received by the trolley. The relative direction of the remote control unit is calculated by comparing the timing of the various reception signals received from the various ultrasonic receivers.

In order to allow for manoeuvrability, especially the capability to make sharp turns, the vehicles typically have a triangular wheel base with two wheels at one end and one wheel at the opposite end. In prior art design of robotic golf caddies, as clearly visible in WO-99/12793, the single wheel is at the side that is directed to the user. However, this is awkward for the user since there is the chance that he hurts his legs against the wheel base.

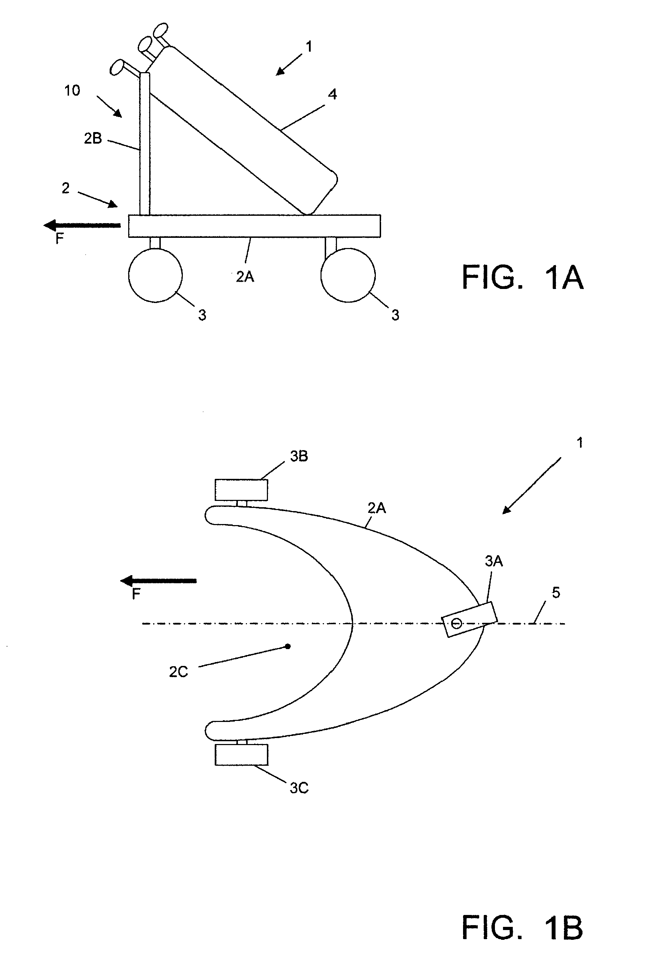

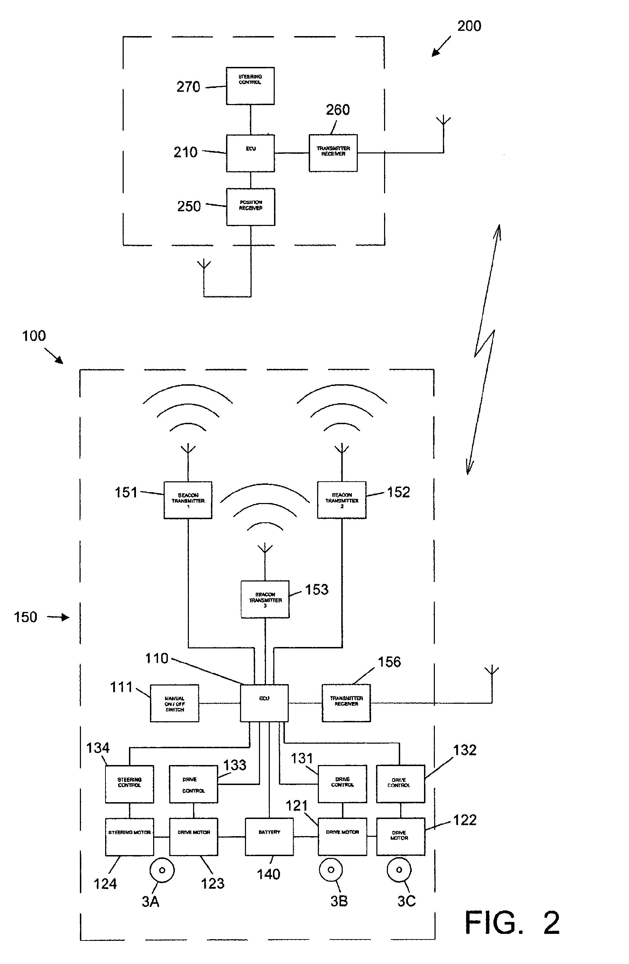

The design of the vehicle according to the present invention has features that advantageously avoid or limit the above disadvantages. These and other aspects, features and advantages of the present invention will be further explained by the following description of a preferred embodiment of the vehicle according to the present invention with reference to the drawings, in which same reference numerals indicate same or similar parts, in which indications "below/above", "higher/lower", "left/right" etc only relate to the orientation displayed in the drawings, and in which: figures 1a and 1B are schematic views of a golf caddy; figure 2 is a block diagram.

In the following, the invention will be specifically explained for the exemplary embodiment of a golf caddy or golf trolley. Figure 1A is a schematic side view of a golf caddy 1 according to the present invention. The golf caddy 1 comprises a supporting frame 2, wheels 3 and a golf bag 4 supported by the frame 2. In principle, it is possible that a golf caddy comprises an integrated bag for receiving golf clubs. However, it is more convenient if the golf bag 4 is a "normal" bag, which the user places onto the frame when needed. After the game, the user picks up the bag from the caddy, and the caddy is parked or perhaps used by another user. As such, the bag 4 is not an integral component of the caddy 1.

The supporting frame 2 comprises a substantially horizontal frame base 2A carrying the wheels 3. Figure 1B is a schematic top view of the frame base 2A. A striped line 5 indicates a virtual vertical plane of symmetry; this line also indicates the direction of travel of the caddy 1, which will also be indicated as the X-direction. It can be seen that, in this embodiment, the caddy 1 comprises three sets of wheels 3A, 3B, 3C, which are positioned in a triangular setup. A first wheel 3A is aligned with the plane of symmetry 5. Second wheel 3B and third wheel 3C are mounted at opposite sides of the plane of symmetry 5, at some X-distance from the first wheel 3A, having their respective rotation axes aligned and perpendicular to the plane 5. The wheels 3A, 3B, 3C may be single wheels. However, it is also possible, for greater stability, that one or more of the wheels are implemented as double wheels.

Apart from rotation around the horizontal wheel axis, the second and third wheels 3B and 3C are fixed wheels. Likewise, the first wheel 3A may be a fixed wheel, but preferably the first wheel 3A is a swivel wheel, capable of rotation about a vertical axis. In such case, the first wheel 3A may be a steering wheel, provided with a steering mechanism for setting the steering position of the first wheel 3A.

The caddy 1 is designed for receiving a golf bag, as mentioned before. To this end, the caddy 1 comprises accommodation means 10 for receiving and accommodating such golf bag, including fixing means for fixing the golf bag when accommodated in the caddy. The accommodation means 10 may be designed such as to hold the golf bag in a vertical orientation. However, it is more convenient if the accommodation means 10 hold the golf bag 4 in an inclined orientation, wherein the angle of inclination may for instance be in the order of about 60° with respect to the horizontal. In the side view of figure 1A, it can clearly be seen that the inclination is such that, in horizontal direction, the bottom of the bag 4 is close to the first wheel 3A while the upper edge of the bag 4 is closer to the second and third wheels 3B, 3C. Reference numeral 2B indicates a frame part supporting the upper portion of the bag 4. In the top view of figure 1B, it can clearly be seen that the frame base 2A has a general U-shaped or V-shaped contour, with the first wheel 3A being mounted at the central base of the UN and the second and third wheels 3B, 3C being mounted at the extremities of the legs of the UN. Between the extremities of the legs of the UN shaped frame base 2A, there is an empty space 2C. This empty space 2C allows the user to approach the caddy closely for putting a club into the bag or taking a club from the bag. The user's feet may be positioned even under the bag's top opening so that the user can stand erect, without the user running the risk of hurting his feet or legs against the caddy frame. Thus, in normal use, the side of the caddy with the single wheel 3A will be directed away from the user; this side will be indicated as rear side. The opposite side, i.e. the side with the empty foot space 2C between the two opposite wheels 3B, 3C, will be indicated as user side or front side. This also defines a direction of forward or rearward motion: when the caddy approaches the user, this will be indicated as the caddy "coming forward", and the forward direction is indicated by arrow F. Likewise, the two opposing wheels 3B, 3C adjacent the empty foot space 2C will be indicated as "front wheels", while the opposite wheel 3A will be indicated as "rear wheel".

While the vehicle in the embodiment shown has only one rear wheel 3A, it is to be noted that the vehicle may have two or even more rear wheels. In such case, those wheels will all be swivel wheels.

However, in an alternative embodiment the layout may be mirrored in that the open edge or mouth of the golf bag is directed to the steering wheel 3A and that the bag's bottom is closer to the two fixed wheels. In such case, the steering wheel 3A marks the front side of the caddy, and the forward direction of the caddy (i.e. the caddy approaching the user) is opposite to the arrow F in figure 1B.

It is noted that in practice a different notion of "forwards" and "backwards" may be used. For instance, the user may control the caddy manually with a remote control unit to displace the caddy over some distance, or to have the caddy move in front of the user while the user walks (as if the user were pushing the caddy). In such manoeuvres, the direction of travel may suitably be with the steering wheel 3A directed forwards.

Further, in the embodiment depicted in figure 1A, it may be considered more convenient if the caddy, when following the user, is always directed such that its steering wheel 3A is directed to the user and hence the golf bag being directed away from the user. In such case, also, the forward direction of the caddy (i.e. the caddy approaching the user) is opposite to the arrow F in figure 1B.

A key feature of the robotic golf caddy, and this applies in fact to all types of user-following vehicles, is the capability to follow the user at a suitable distance. That distance should be large enough such as to not hinder the user in his movements, and should be small enough to allow the user to quickly place a club into the bag or pick a club from the bag without the user having to walk a large distance. To this end, the caddy 1 comprises an autonomous displacement system 100, as will now be explained with reference to figure 2, which is a block diagram showing functional components of the displacement system 100.

The displacement system 100 comprises a central control device 110, for instance a microcontroller.

The displacement system 100 further comprises a first drive motor 121 for driving the second wheel 3B and a second drive motor 122 for driving the third wheel 3C. Actuation of these two drive motors 121, 122 is done by respective drive control devices 131, 132, which in turn are controlled by the central controller 110.

Reference numeral 140 indicates a battery for providing power to the electric and electronic components such as to the motors and to the controller. The battery is provided with a connector for connecting the battery to a charging device, but this is not shown for sake of simplicity.

Reference numeral 111 indicates an ON/OFF switch for switching the displacement system 100 on or off. In the embodiment shown, the switch 111 is associated with the central control device 110, but it is also possible that the switch 111 is associated with the battery 140.

It should be clear that the caddy 1 moves in a straight line, parallel to its central plane 5, when the two drive motors 121, 122 drive the two front wheels 3B, 3C at the same speed. The wheels can be rotated in a forward direction for moving the caddy forward to the user, or in the opposite direction for moving the caddy away from the user. Curves can be made by having one front wheel rotate faster than the other one. Very sharp turns are possible, and the caddy can even rotate on the spot, by having the driven wheels rotate in mutually opposite directions. In all of these cases, the swivelling wheel 3A will follow the movements, automatically adapting its swivel position. However, the caddy 1 may move with more agility if the swivel position of the swivelling wheel 3A is actively controlled by the controller 110. Thereto, the displacement system 100 preferably comprises a steering motor 124, actuated by a steering control device 134, which in turn is controlled by the central controller 110. Further, it is possible that the swivelling wheel 3A is provided with its own drive motor 123 and associated drive control device 133. This option may be particularly preferred for caddies that are to be used in sloping terrain.

It is noted that the drive control devices 131, 132, 133 and the steering control device 134 are shown as separate devices, but alternatively these control devices may be integrated with the central control device 110.

While the above description has explained the components which make movement of the caddy possible, a key feature of the present invention is the way in which is determined whether or not the caddy should be moved, and in which direction.

In prior art, complicated navigation systems are used, based on GPS. In GB-2283838, the vehicle sends a first ultrasonic signal to the target, after which the target sends a second ultrasonic signal to the vehicle. The vehicle has a plurality of receivers around its perimeter, and the direction of the target is determined on the basis of which receiver is the first to receive the second signal. The vehicle measures the time delay between sending the first signal and receiving the second signal to calculate the distance to the target. One disadvantage is that the processing time of the target, needed for receiving the first signal and transmitting the second signal, is part of the measured delay and thus influences the distance measurement. Another disadvantage is that an accurate calculation of direction is not possible. A further disadvantage is that ultrasonic signals are easily disturbed by interference from persons or objects such as bushes and shrubbery. A further disadvantage is that the user must hold the remote control unit aimed at the vehicle.

In the present invention, the caddy 1 is provided with a remote target unit 200. The remote target unit 200 is a small electronic unit, to be carried by the user. It has already been explained that the caddy 1 will actually follow the target unit 200 while it seems that the caddy follows the person carrying the target unit. Further, the displacement system 100 comprises stereoscopic location detection means 150 for detecting the relative location of the remote target unit 200 with respect to the caddy 1, and the displacement system 100 is designed to displace the caddy 1 on the basis of the detected relative location of the remote target unit 200.

The location detection means 150 comprises means for transmitting a signal between the caddy 1 and the remote target unit 200, and to determine the distance between transmitter and receiver on the basis of the characteristics of the received signal. For instance, the distance may be determined on the basis of the delay time between transmission and receipt, or on the basis of attentuation of the transmitted signal, or both. An important feature of the present invention is that such location detection means 150 are stereoscopic, i.e. the distance is measured from the remote target unit 200 to two (or preferably even three) different locations on board of the caddy 1, so that it is possible to accurately determine the orientation of the caddy 1 with respect to the remote target unit 200.

In a possible embodiment, the remote target unit 200 transmits a signal pulse, and the location detection means 150 comprise at least two, but preferably three, receivers for receiving the signal pulse. The receiver closest to the remote target unit 200 will be the first to receive the signal pulse, while the most remote receiver will be the last to receive the signal pulse. Based on the time difference between the reception signals, the control device 110 is capable of determining the position of the remote target unit 200 in the coordinate system of the caddy, and the control device 110 is programmed to drive the caddy such that the remote target unit 200 is centered in front of the caddy, at the desired distance.

However, in the embodiment illustrated in figure 2, the location detection means 150 comprise at least two, but preferably three, transmitters 151, 152, 153 on board of the caddy 1 for transmitting an electromagnetic beacon signal, controlled by the control device 110. The transmitted beacon signal is received by a receiver 250 of the remote target unit 200. The remote target unit 200 comprises a control device 210 which analyses and processes the received signal, and which transmits a response signal via a wireless transmitter 260 operating in frequency range different from the electromagnetic beacon signal. In the response signal, the control device 210 includes data defining the signal strength (magnitude, amplitude) of the received beacon signal. For transmitting the response signal, communication means may include Bluetooth or Zigbee or the like.

The location detection means 150 further comprises a receiver 156 for receiving the response signal. The controller 110 processes the received response signal to derive the data contained therein. Specifically, the controller knows the signal strength of the transmitted beacon signal, and from the data in the response signal the controller knows the signal strength of the beacon signal at the location of the target; from these two data, the controller calculates the attentuation of the signal, which is a measure for the distance between the transmitter 151, 152, 153 and the remote target unit 200. While for a correct functioning it is not absolutely essential, it will in the following explanation be assumed that said distance is actually calculated by the control device 110.

The control device 110 performs the above actions for the first transmitter 151 and the second transmitter 152 in alternating manner. It is possible that the control device 110 transmits a beacon signal with one transmitter, waits for the response signal from the remote target unit 200, and then transmits a beacon signal with the other transmitter, so that it is always clear to which transmitter the response belongs. It is also possible that the control device 110 sends a first signal pulse with the first transmitter 151 and after a short time interval sends a second signal pulse with the second transmitter 152, and repeats this sequence after a longer time interval. In such case, the remote target unit 200 always receives trains of two signal pulses, and the response signal may include two data for the signal strength of the first pulse and the signal strength of the second pulse, respectively.

Thus, in any case, the control device 110 knows the respective distances from the remote target unit 200 to the respective transmitters 151 and 152, hence the notion of stereoscopic distance measurement. From this information the control device 110 can calculate the orientation of the caddy with respect to remote target unit 200. Two of said transmitters 151, 152 are mounted at opposite sides of symmetry plane 5, in a symmetric arrangement and preferably as far apart as possible. They may typically be located at the widest part of the caddy portion, which in the embodiment shown corresponds to the front side of the caddy frame 2, possibly close to the front wheels 3B, 3C. For avoiding possible ambiguities, the caddy 1 may have a third transmitter 153 mounted in the symmetry plane 5, as far away as possible from the line connecting the first and second transmitters, hence typically at the rear of the caddy: actuating this third transmitter provides the control device 110 with a third distance measurement.

On the basis of the calculated distances, the control device 110 controls the drive motors 121, 122 of the front wheels, and possibly the steering motor 124 and/or drive motor 123 of the rear wheel, for changing the orientation of the caddy such that the remote target unit 200 is located in the plane 5 in front of the caddy 1. The caddy is now facing the user.

Further, the control device 110 calculates the actual distance of the remote target unit 200 from the caddy, and compares the actual distance with two predefined threshold distances. The first threshold distance defines an outer boundary of operation: if the actual distance is larger than this outer boundary, the control device 110 does not move the caddy. Preferably, the caddy is provided with brakes, and the control device 110 actuates these brakes. Said brakes may be provided as separate brake members, but in a preferred embodiment the drive motors can also operate as electric brakes. This can be done by actively generating counter-drive if the caddy would start moving, for instance caused by gravity or wind. As a safety measure for the possible situation that the battery 140 is empty, electric braking can be provided by short-circuiting the drive motors.

A suitable value for the first threshold distance may for instance be in the range of 4 to 20 meters.

The second threshold distance defines a desired distance: this is the distance where the caddy should ideally be. If the actual distance is larger than this desired distance but less than the outer boundary, the control device 110 controls the drive motors for moving the caddy 1 forward, towards the user. With reducing distance, the speed may be reduced, so that the caddy softly comes to a standstill at the desired distance.

The above is repeated at a suitable repetition frequency, for instance 10 times per second. Thus, when the user moves, the caddy follows, always facing the user, and always keeping a certain distance.

When the user moves closer to the caddy, the caddy should not back away, because it should allow the user to approach in order to, for instance, take a club from the bag. This can be implemented in two ways. In one implementation, the remote unit 200 is implemented as a remote control unit, or the system includes a separate remote control unit, having a key with which the user can issue a standstill command, which is similar to a deactivate command: after the control device 110 receives such command, it will keep the caddy stationary until receiving a reactivate command. In another implementation, the control device 110 intelligently interprets the timed evolution of the measured distance to target unit: if the caddy is standing still while the target unit is found to approach at a certain speed, the control device will conclude that the user is deliberately approaching and will remain standing still.

A suitable value for the second threshold distance may for instance be 1.5 m. In a preferred embodiment, the control device 110 has a user input for allowing the user to set the second threshold distance and/or first threshold distance.

Preferably, the caddy is provided with a remote control unit, which may be a separate unit but which may also be integrated with the remote target unit 200. Figure 2 shows a user input means 270 associated with the control device 210 of the remote target unit 200. This will allow the user to send steering command signals to the displacement system 100, so that the user can manually displace the caddy, even at distances beyond said outer boundary of operation. In such case, signals sent by the remote target unit 200 will contain data defining the signal as command signal, and defining command instructions such as "forward", "left", etc. It is noted that the control device 110 of the caddy may be programmed to ignore these command signals if the distance is larger than a third threshold distance, for instance 50 m. Using this remote control unit, the user may displace the caddy at a distance, but it is also possible that the user is walking and wishes the caddy to move in front of him, with the front side of the caddy directed towards the user, so that the caddy is moving backwards.

The electromagnetic signals are generated by applying an alternating current to a transmitter coil. In order to avoid possible interference from the human body, the frequency of these signals may advantageously be selected in the range of 100 - 150 kHz, preferably about 120 kHz. It is further noted that the signals may contain a code, such that the receiver may recognize signals from the corresponding transmitter, in order to avoid multiple caddy's interfering with each other.

In the remote target unit 200, the signal is received by a receiver coil. Best reception is achieved if the receiver coil is parallel to the transmitter coil. In the caddy, the transmitter coils are preferably mounted with their axis vertical. However, in the remote target unit 200, it may be difficult and inconvenient to assure that the receiver coil is always held vertical. In order to avoid this problem, the receiver 260 of the remote target unit 200 comprises three receiver coils having their axes arranged at 90° with respect to each other. In a worst case, the line of sight between the remote target unit 200 and a transmitter 151, 152, 153 makes an angle of about 55° with each transmitter coil axis; in practice, this angle will be larger than 55° for at least one transmitter coil axis. The controller 210 may calculate a signal strength S on the basis of all three coil signals combined; for instance, the controller 210 may calculate the signal strength S to be communicated to the caddy according to the following formula:

$$S = \sqrt{Sx^2 + Sy^2 + Sz^2}$$

with Sx indicating the signal strength is a first receiver coil, Sy indicating the signal strength is a second receiver coil, Sz indicating the signal strength is a third receiver coil. In a somewhat simplified embodiment, the controller 210 may take the strongest of the three coil signals according to the following formula:

$$S = Max(Sx, Sy, Sz)$$

It should be clear to a person skilled in the art that the present invention is not limited to the exemplary embodiments discussed above, but that several variations and modifications are possible within the protective scope of the invention as defined in the appending claims.

For instance, although it is preferred that the stereoscopic transmitters 151 and 152 are located symmetrically with respect to the plan of symmetry, this is not essential for implementing the invention.

The reference numerals used in the claims only serve as clarification when understanding the claims with a view to the exemplary embodiments described, and should not be interpreted in any way limiting.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

**Claims**

1. Target-following vehicle (1), comprising:

a frame (2) carrying wheels (3), the frame having a front side and a rear side;
driving means (121; 122; 123) for driving the wheels;
control means (110) for controlling the driving means;
a remote target unit (200) associated with the vehicle;
stereoscopic location detection means (150) for detecting the relative location of the remote target unit (200) with respect to the vehicle;
wherein the control means (110) are designed to control the driving means such that the front side of the frame is directed to the remote target unit, and such that the distance between vehicle and remote target unit is reduced if that distance is more than a predetermined desired distance;
wherein the location detection means (150) comprise:

- a first transmitter (151) mounted at a first reference position of the vehicle (1);
- a second transmitter (152) mounted at a second reference position of the vehicle (1), at a distance from the first reference position;

- preferably a third transmitter (153) mounted at a third reference position of the vehicle (1), at a distance from a line connecting the first and second reference positions;

wherein the control means (110) are designed to selectively actuate one of said transmitters (151; 152; 153) for generating a signal pulse having a certain signal pulse strength; wherein the remote target unit (200) comprises receiving means (250) for receiving said signal pulse, and processing means (210) for processing the received signal pulse, determining the signal strength of the received signal pulse, and generating a response signal containing data representing the measured signal strength; wherein the location detection means (150) of the vehicle (1) comprise a receiver (156) for receiving the response signal generated by the remote target unit (200); wherein the control means (110) is designed process the data contained in the received response signal, to compare the measured signal strength with the signal pulse strength of the generated signal pulse, and to calculate the distance between the remote target unit (200) and the activated one of said transmitters (151; 152; 153) on the basis of the signal attenuation or the ratio between measured signal strength and signal pulse strength.

2. Target-following vehicle according to claim 1, wherein the control means (110) are designed to consecutively actuate two mutually different transmitters (151, 152) to generate two consecutive signal pulses, to receive and process the response signals received from the remote target unit such as to calculate the respective distances between the remote target unit (200) and the respective transmitters (151; 152; 153), and to calculate the relative location of the remote target unit (200) with respect to the vehicle on the basis of the detected two distances.

3. Target-following vehicle according to claim 2, wherein the control means (110) waits till the response signal with respect to a first transmitter (151) is received, and then generates the signal pulse with a second transmitter (152).

4. Target-following vehicle according to claim 2, wherein the control means (110) are designed to generate a train of signal pulses by sequentially actuating different ones of said transmitters (151; 152; 153), and wherein the processing means (210) of the remote target unit (200) are designed to generate the response signal to include data representing the measured signal strengths of the consecutively received signal pulses.

5. Target-following vehicle according to any of the previous claims, wherein the vehicle's transmitters (151; 152; 153) comprise respective coils for generating an electromagnetic pulse in a first frequency range, and wherein the remote target unit (200) comprises transmitter means (250) for generating the response signal as a coded electromagnetic signal in a second frequency range differing from the first frequency range, preferably higher than the first frequency range.

6. Target-following vehicle according to claim 5, wherein the first frequency range is in the range of 100 - 150 kHz, preferably in the order of about 125 kHz, and/or wherein the remote target unit (200) comprises communication means for generating the response signal as a Bluetooth signal or Zigbee signal or the like.

7. Target-following vehicle according to any of the previous claims, wherein the receiver (250) of the remote target unit (200) comprises three receiver coils mounted orthogonally with respect to each other, and wherein the processing means (210) of the remote target unit (200) are designed to calculate the measured signal strength S according to the following formula:

$$S = \sqrt{Sx^2 + Sy^2 + Sz^2}$$

wherein Sx, Sy and Sz indicate the signal strengths as received by the individual receiver coils.

8. Target-following vehicle according to any of the previous claims, wherein the receiver (250) of the remote target unit (200) comprises three receiver coils mounted orthogonally with respect to each other, and wherein the processing means (210) of the remote target unit (200) are designed to calculate the measured signal strength S according to the following formula:

$$S = Max(Sx,\ Sy,\ Sz)$$

wherein Sx, Sy and Sz indicate the signal strengths as received by the individual receiver coils.

9. Target-following vehicle according to any of the previous claims, wherein the control means (110) are designed to keep the vehicle stationary if said distance is more than a predetermined threshold distance.

10. Target-following vehicle according to any of the previous claims, having two fixed wheels (3B; 3C) mounted at a first side of the frame (2), having their respective rotation axes aligned and perpendicular to a plane (5) of symmetry, and having at least one swivel wheel (3A) mounted at an opposite side of the frame (2); wherein the frame (2) preferably has a central empty foot space (2C) between said two fixed wheels (3B; 3C).

**11.** Target-following vehicle according to claim 10, further comprising drive means (123) for driving the swivel wheel (3A) and/or steering means (124) for steering the swivel wheel.

**12.** Target-following vehicle according to any of the previous claims, further comprising electric and/or magnetic brake means for holding the vehicle stationary.

**13.** Target-following vehicle according to any of the previous claims, the vehicle being implemented as a golf caddy and comprising accommodation means (10) for receiving and accommodating a golf bag (4), wherein the accommodation means hold the golf bag in an inclined orientation, preferably with the bottom of the bag close to the rear side of the frame and the upper edge of the bag close to the front side of the frame.

**14.** Target-following vehicle according to any of the previous claims 1-12, the vehicle being implemented as a shopping-cart, or a baby-buggy, or a warehousing cart, or a toy.

FIG. 1A

FIG. 1B

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9912793 A
- US 20100168934 A

- GB 2283838 A